# EUROPEAN PATENT SPECIFICATION

(11) **EP 1 694 557 B1**
(45) Date of publication and mention of the grant of the patent: **20.04.2011**
(21) Application number: 04706701.2
(22) Date of filing: 30.01.2004
(51) Int. Cl.: B63B 25/14, F17C 7/00

(54) **GAS SUPPLY ARRANGEMENT OF A MARINE VESSEL AND METHOD OF CONTROLLING GAS PRESSURE IN A GAS SUPPLY ARRANGEMENT OF A MARINE VESSEL**
GASZUFUHRANORDNUNG EINES WASSERFAHRZEUGS UND VERFAHREN ZUR STEUERUNG VON GASDRUCK IN EINER GASZUFUHRANORDNUNG EINES WASSERFAHRZEUGS
SYSTEME D'ALIMENTATION EN GAZ D'UN BATIMENT DE MER ET PROCEDE DE CONTROLE DE LA PRESSION DU GAZ DANS UN SYSTEME D'ALIMENTATION EN GAZ D'UN BATIMENT DE MER

(30) Priority: 18.12.2003 FI 20031848
(43) Date of publication of application: 30.08.2006
(73) Proprietor: Wärtsilä Finland Oy, 65380 Vaasa (FI)
(72) Inventor: MAHLANEN, Timo, FI-00850 Helsinki (FI)
(74) Representative: Finnilä, Kim Larseman
(86) International application number: PCT/FI2004/050009
(87) International publication number: WO 2005/058684

(56) References cited:
- EP-A1- 1 348 620
- EP-A2- 1 291 576
- FR-A1- 2 722 760
- US-A- 4 276 749
- US-A- 5 590 535
- US-A- 5 884 488

## Description

The invention relates to a gas supply arrangement of a marine vessel according to preamble of claim 1 and to a method of controlling gas pressure in a gas supply arrangement of a marine vessel according to the preamble of claim 8.

The propulsion system of LNG (Liquified Natural Gas) tankers is usually powered by making use of the cargo. Storing of the gas in the tanker is arranged by using heat insulated cargo tanks into which an ullage space section and a liquid phase section are formed. The pressure in the cargo tanks is approximately at atmospheric pressure level and the temperature of the liquefied gas is about minus 163 °C. Although the insulation of the cargo tank is extremely good, gradually increasing of the LNG temperature causes formation of so called natural boil-off gas. The natural boil-off gas must be removed in order to avoid extensive increasing of pressure in the cargo tanks. The natural boil-off gas may be utilised in tanker's consumption devices like propulsion system. However, the amount of natural boil-off gas is not sufficient for providing all propulsion energy required in all circumstances and therefore the vessel must be provided with additional means for acquiring extra gas, so called forced boil-off gas. Additionally the usage of the gas as source of propulsion energy sets requirements for the pressure level and stability of the gas.

For example in a patent publication FR 2722760 there is shown an arrangement in which liquid gas is supplied to a so called forced boiling vaporiser in which the liquid gas vaporises into gas form, which in turn may be combined with the natural boil-off gas.

EP 1348620 A1 shows a gas supply apparatus in which the natural boil-off gas is led to a compressor, which increase the pressure of the gas prior to feeding it to consumption via a feed line. The capacity of the compressor feeding the natural boil-off gas is controlled by the pressure at the feed line. Additionally, the apparatus also includes a forced boiling vaporiser in which the liquid gas previously pumped to the higher pressure is vaporised. In this arrangement the forced boiling gas portion is combined to the natural boil-off gas after the pressure of the natural boil-off gas has been increased. This arrangement is mentioned to decrease the work required to compress the gas to a given pressure. It has, however, some problems, which are discussed below.

The supply amount of the forced boiling gas is controlled by on-off valve positioned prior to the vaporiser, the control being based on the gas cargo tank pressure. The operation of the pump is also controlled by on-off control based on the pressure of the gas cargo tank. The line between the gas cargo tank and the vaporiser has also a branch for returning a part of pumped liquid gas back to the gas cargo tank. The amount of returned part is controlled based on the pressure of the gas line before the vaporiser. A problem in this arrangement is the returning of the pumped liquid gas back to the cargo tank. That is not desired due to the heating effect of the liquid gas slightly warmed up by the pumping and circulation.

As the consumption of the gas at the outlet side (the feed line) of the vaporiser and compressor varies, the process must be controlled so that the pressure in the gas cargo tank and/or in the feed line will not rise too much and so that required amount of gas may be supplied. When the formation of the natural boil-off gas is not strong enough or consumption is suddenly increasing, the pressure in the ullage space of the gas cargo tank decreases and the operation of forced boiling vaporiser and liquid gas pump is started. After operating the pump and the vaporiser a while the pressure will increase to adequate level. Then the pump may be shut down and the valve of the forced boiling vaporiser is also closed. Particularly because the operation of the vaporiser is on-off controlled, the variation of the pressure in the feed line is inevitably very strong. This is even more emphasised by the fact that the vaporiser is typically dimensioned for 100% consumption, which makes the control very rough. Therefore, this kind of a control system is very complicated and also somewhat unstable. Similar arrangement to this is shown in EP 1291576 A2.

An objective of the invention is to provide a gas supply arrangement for a marine vessel, which solves the above mentioned and other problems of the prior art. It is also an objective of the invention to provide a method of controlling gas pressure in a gas supply arrangement for a marine vessel with liquefied gas cargo tank, which provides even pressure at the feed line and reliable gas supply for consumption devices of the vessel.

Objectives of the invention are met substantially as is disclosed in claims 1 and 8, and in more detailed manner in other claims. In the following the invention will be described with a reference mainly to one cargo tank. However, it is clear that a marine vessel may be provided with several cargo tanks each having an individual gas supply arrangement or several cargo tanks may be connected parallel having a shared gas supply arrangement.

According the invention, the gas supply arrangement of a marine vessel being adapted to carry liquefied gas in its cargo tank having an ullage space section and a liquid phase section and to utilise the cargo as fuel to provide power for the vessel, comprises
- a first gas supply line, which connects an ullage space section of the cargo tank and a gas main supply line and which is provided with a compressor for raising the pressure of the gas to an adequate level, and
- a second gas supply line, which connects liquid phase section of the cargo tank and the gas main supply line and which is provided with at least a pump for raising the pressure of the liquid gas and for pumping it forward.

It is mainly characteristic to the invention that the second gas supply line is additionally provided with a gas reservoir having an ullage space section and liquid phase section, which reservoir is connected to the liquid phase section of the cargo tank by a first duct section of the second gas supply line and to the gas main supply line by a second duct section of the second gas supply line.

The reservoir is provided with temperature control unit by means of which the pressure in the reservoir may be indirectly controlled. This kind of an arrangement provides a gas supply system, with which the pressure of the gas in the main supply line may be easily controlled and maintained very stable.

The temperature control unit of the reservoir comprises adjustable heating device for heating the liquid phase gas in the reservoir. By heating the liquid it is possible to activate gas evaporation of the liquid gas the liquid phase section.
Preferably the heating device is provided with control device being responsive to the gas pressure in the reservoir. This provides accurate and reliable means for controlling pressure. The reservoir is preferably also provided with surface level control arrangement for controlling the surface level of the liquid phase section. Preferably the heating device is provided with a heat exchanger external to the reservoir being in connection with the liquid phase section of the reservoir by piping. The second duct section of the second gas supply line is preferably provided with an automatically controlled closing valve, which may close the supply of gas quickly in case the gas consumption stops rapidly.

The reservoir is advantageously dimensioned to have a volume corresponding to few hours gas consumption through the gas main supply line, which provides a possibility of using the reservoir as buffer gas source. The dimensioning depends on the specific application in question e.g. discharge time of the tanks may be taken into account.

The reservoir is so connected that the first duct section of the second gas supply line extends into a liquid phase section of the reservoir, and the second duct section of the second gas supply line extends from the ullage space section of the reservoir to the gas main supply line.

In the method according to the invention of controlling gas pressure in a gas supply arrangement of a marine vessel with liquefied gas cargo tank having an ullage space section and liquid phase section, and with a gas consumption device, gas from the cargo tank is led to the consumption device via a first gas supply line, which is provided with a compressor, the compressor raising the pressure of natural boil-off gas to an adequate level, and additionally or alternatively via a second gas supply line, which connects liquid phase section of the cargo tank and the gas consumption device, the second gas supply line is provided with a pump for raising the pressure of the liquid gas and pumping it forward. In the second gas supply line gas is fed into a reservoir having an ullage space section and liquid phase section, in which the gas is temporarily stored. From the reservoir gas is further introduced to the gas consumption device. Gas is evaporated in the reservoir and the pressure of the gas in the in the second gas supply line is controlled by controlling the temperature of the liquid phase section of the reservoir by a temperature control unit comprising a heating device.

The invention has several advantages. First of all, the pressure control is very accurate due to the novel way of controlling the pressure by heating the liquid gas. Additionally the invention provides a buffer for gas fuel for the consumption devices in case the connection to the cargo tank must be cut off.

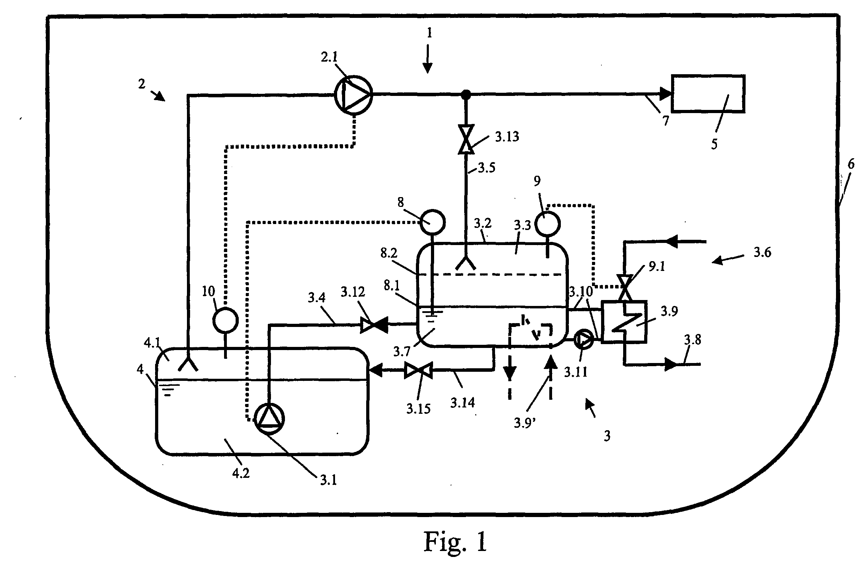

In the following the invention will be described with the reference to the accompanying schematic drawing, in which figure 1 shows a preferred embodiment of the gas supply arrangement according to the invention.

Figure 1 shows schematically cross section of a marine vessel 6, like LNG tanker. The vessel 6 is adapted to carry liquefied gas in it cargo tanks. Normally there are several tanks in a tanker, but in the figure 1 only one cargo tank 4 is shown for clarity reasons. The cargo tank 4 is filled so that there is always an ullage space section 4.1 filled with gas in gaseous form and a liquid phase section 4.2 filled with liquefied gas. During the storing of the liquefied gas in the cargo tank 4 the gas is evaporating changing its phase and transferring to the ullage space 4.1. The evaporated gas, so called natural boil-off gas, may be utilised in a consumption device 5 of the vessel 6. The consumption device 5 is preferably a gas engine providing propulsion power. In the figure only one consumption device 5 is shown but it is clear that there may be several devices.

The vessel 6 is provided with a gas supply arrangement 1, which comprises a first gas supply line 2. The first gas supply line 2 extends from an ullage space section 4.1 of the cargo tank 4 to a gas main supply line 7 leading to the consumption device 5. The first gas supply line 2 is adapted for delivering the evaporated boil-off gas from the cargo tank 4 to the consumption device 5 of the vessel 6 via a main supply line 7. The pressure in cargo tank 4 is maintained slightly over-pressurised. The first gas supply line 2 is provided with a compressor 2.1 for raising the pressure of the boil-off gas to an adequate level for usage in the consumption device 5. The pressure level in the gas main supply line 7 must be maintained at appropriate pressure but below maximun design limits. The lower limit is typically ruled by requirements of the gas engines of the vessel being as the consumption device 5. The capacity of the compressor 2.1 is controlled by making use of pressure measurement device 10 provided in the cargo tank ullage space, so that the pressure in the cargo tank remains within certain design limits.

The gas supply arrangement 1 comprises also a second gas supply line 3. The second supply line 3 is arranged for converting the liquefied gas into gaseous form for example in case the amount of the natural boil-off gas is not big enough. The second supply line 3 is principally parallel line to the first supply line 2, leading from the cargo tank 4 to the main supply line 7. Therefore it is provided with a liquid gas pump 3.1 for raising the pressure of the liquid gas to approximately level of the main supply line 7. The pump 3.1 is preferably positioned in the liquid phase section 4.2 of the cargo tank 4 so that it pumps the gas in liquid form. The converting the liquefied gas into gaseous form is accomplished by providing the second supply line 3 with a gas reservoir 3.2, into which the pump 3.1 transfers the liquid gas via a first duct section 3.4 of the second gas supply line 3. The first duct section 3.4 is preferably provided with a check valve or automatic controlled close valve 3.12 for preventing the return of the liquid gas back to the cargo tank 4. The pump 3.1 and valve 3.12 are operated under control of a surface level control arrangement 8 provided in the reservoir 3.2. The pump is started when the level of the surface is at its lower limit 8.1 and the pump is running until the surface is raised to its upper limit 8.2. Preferably the surface limits are selected so that the reservoir is 20% filled at minimum and 80% filled at maximum. The output of the pump 3.1 is preferably selected so that the ascending speed of the surface is relatively low during the filling. This way the filling of the reservoir 3.2 has minimum impact on the gas pressure in the ullage space section 3.3 of the reservoir 3.2. The effect of the ascending surface to the pressure may be at least partly compensated by properly controlling a reservoir temperature control unit, which will be described later. Due to the properties of the gas i.e. the volume of the gas in gaseous form being approximately 600 times as much as is in liquid form, the output of the pump 3.1 may be selected in this manner without a risking the gas formation capacity. Typically the cargo tank 4 is provided with a so called spray pump, and the pump 3.1 may be a separate pump or the spray pump.

Formation of gaseous gas in the reservoir 3.2 is accomplished partly by arranging the ullage space section 3.3 in the reservoir i.e. taking care that the upper limit 8.2 of the surface of the liquid gas is not too high. However, mainly the gas evaporation and simultaneously the pressure level in the ullage space section 3.3 is controlled by controlling the temperature of the liquid phase section 3.7 in the reservoir 3.2. This is accomplished by the temperature control unit 3.6. The unit comprises pressure sensor 9 provided in the reservoir, based on measurement value of which the temperature of the liquid phase section 3.7 is controlled. The principle of the control is based on the fact that the higher the temperature, the stronger the evaporation of the gas is. So, when the liquid phase section 3.7 is heated the formation of gaseous gas is increased and the simultaneously the pressure depending on the consumption, of course. This applies also vice versa.

The heating of the liquid gas in the liquid phase section 3.7 is accomplished by a heating device. The heating device according to a preferred embodiment of the invention comprises an external heat exchanger 3.9 into and from which the liquefied gas is flowing through piping 3.10. The liquefied gas is heated by a heat transfer medium flowing in the other side 3.8 of the heat exchanger 3.9. There may be a circulation pump 3.11 for facilitating the flowing of the liquefied gas, but the piping may be so dimensioned that free circulation (based on density difference) will occur. Heat transfer rate and thus heating of the liquefied gas is controlled by a valve 9.1, which controls the flow of the heat transfer medium. The heat transfer medium may be e.g. water or steam, but practically any suitable heat source, also electric heater, may be utilised. In the figure 1 also a possible direct heater 3.9' is shown with dotted line.

Gas from the reservoir is led to the gas main supply line 7 via a second duct section 3.5 of the second gas supply line 3. When the output of the boil-off gas (first gas supply line 2) is not enough for consumption demand, the pressure in the main supply line 7 will modestly decrease and the gas will flow through the second duct section 3.5 from the ullage space 3.3 of the reservoir 3.2. This causes a minor pressure drop in the ullage space 3.3, which is detected by the sensor 9. The measurement is transmitted to a control device (not shown for clarity reasons) which sends a command to the valve 9.1 in order to actuate opening movement. This, in turn, increases the heat transfer from the heat transfer medium to the liquefied gas raising its temperature. And, since temperature of the liquefied gas is raised, the evaporation of the gas is increased and the pressure drop in the ullage space section 3.3 will be compensated. In case other type of heating device would be used its output power would be controlled by the pressure measurement sensor 9.

This kind of a pressure control arrangement is very stable and easy to adjust to maintain the supply line pressure within the required limits. Additionally the reservoir 3.2 provides a buffer for example for situation when the cargo tanks 4 must be cut off from the vessel's gas supply. For example while discharging the cargo tank 4 at port terminal, it may be advantageous to have some buffer volume and therefore the reservoir 3.2 may be dimensioned to have a volume corresponding to at least four hours gas consumption through the gas main supply line 7.

The second duct section 3.5 of the second gas supply line 3 is provided with an automatically controlled closing valve 3.13. In case the gas consumption stops rapidly, the valve 3.13 is closed. In this case the pressure in the reservoir 3.2 will be allowed to increase to slightly higher level than normally. The reservoir 3.2 is provided with a pipe 3.14 which opens into the liquid phase section of the reservoir and which leads back to the cargo tank 4. The pipe is provided with a valve 3.15 for controlling the flow of liquid gas. This provides eg. A possibility of returning heavier hydrocarbon compounds back to the cargo tank 4.

During the filling of the reservoir 3.2 the pressure in the ullage space 3.3 partly increases due to the ascending surface level, this is registered by the pressure sensor 9, which information is transmitted also to the temperature control unit 3.6.

Control dependencies in the figure 1 is shown informally by dotted lines for clarity reasons. However, it is clear that the control system may be realised by various manners, using centralised or distributed control arrangements.

The invention is not limited to the embodiment shown but several modifications of the invention are conceivable within the scope of the appending claims.

## Claims

1. Gas supply arrangement (1) of a marine vessel (6) being adapted to carry liquefied gas in its cargo tank (4) having an ullage space section (4.1) and a liquid phase section (4.2), and to utilise the cargo as fuel to provide power for the vessel, the arrangement comprising
- a first gas supply line (2), which connects the ullage space section (4.1) of the cargo tank (4) and a gas main supply line (7) and which is provided with a compressor (2.1) for raising the pressure of the gas to an adequate level,
- a second gas supply line (3) which connects the liquid phase section (4.2) of the cargo tank (4) and the gas main supply line (7) and which is provided with at least a pump (3.1) for raising the pressure of the liquid gas and for pumping the liquid gas forward,
**characterised in that**
the second gas supply line (3) is provided with a gas reservoir (3.2) having an ullage space section (3.3) and a liquid phase section (3.7),
which gas reservoir (3.2) is connected to the liquid phase section (4.2) of the cargo tank (4) by a first duct section (3.4) of the second gas supply line (3) and to the gas main supply line (7) by a second duct section (3.5) of the second gas supply line (3), and **in that** the gas reservoir (3.2) is provided with a temperature control unit (3.6) comprising a heating device (3.9;3.9') for heating the liquid gas in the liquid phase section (3.7) of the gas reservoir (3.2).

2. Gas supply arrangement (1) according to claim 1, **characterised in that** the gas reservoir (3.2) is provided with a surface level control arrangement (8) for controlling the surface level of the liquid phase section (3.7) of the gas reservoir (3.2).

3. Gas supply arrangement (1) according to claim 1, **characterised in that** the heating device (3.9, 3.9') is provided with a control device (9, 9.1) responsive to the gas pressure in the gas reservoir (3.2).

4. Gas supply arrangement (1) according to claim 3, **characterised in that** the heating device (3.9) is provided with a heat exchanger external to the gas reservoir (3.2) being in connection with the liquid phase section (3.7) of the gas reservoir (3.2) by piping (3.10).

5. Gas supply arrangement (1) according to claim 1, **characterised in that** the first duct section (3.4) of the second gas supply line (3) extends into the liquid phase section (3.7) of the gas reservoir (3.2), and **in that** the second duct section (3.5) of the second gas supply line (3) extends from the ullage space section (3.3) of the gas reservoir (3.2) to the gas main supply line (7).

6. Gas supply arrangement (1) according to claim 1, **characterised in that** the second duct section (3.5) of the second gas supply line (3) is provided with an automatically controlled closing valve (3.13).

7. Gas supply arrangement (1) according to claim 1, **characterised in that** the liquid phase section (3.7) of the gas reservoir (3.2) and the cargo tank (4) are connected with each other with a pipe (3.14) provided with a valve (3.15)

8. Method of controlling gas pressure in a gas supply arrangement of a marine vessel (6) with a cargo tank (4) for liquefied gas, which cargo tank (4) has an ullage space section (4.1) and a liquid phase section (4.2), and a gas consumption device (5), in which method gas from the cargo tank (4) is led to the gas consumption device (5) via a first gas supply line (2) which is provided with a compressor (2.1), the compressor raising the pressure of the gas to an adequate level, and additionally or alternatively via a second gas supply line (3), which connects the liquid phase section (4.2) of the cargo tank (4) and the gas consumption device (5), the second gas supply line (3) being provided with a pump (3.1) for raising the pressure of the liquid gas and pumping it forward,
**characterised in that**
in the second gas supply line (3) gas is fed into a gas reservoir (3.2) having an ullage space section (3.3) and a liquid phase section (3.7), in which gas reservoir (3.2) the gas is temporarily stored and from which gas reservoir (3.2) gas is introduced to the gas consumption device (5), and **in that** the temperature of the liquid phase section (3.7) of the gas reservoir (3.2) is controlled by a temperature control unit (3.6) comprising a heating device (3.9; 3.9').

9. Method of controlling gas pressure according to claim 8, **characterised in that** the pressure of the gas in the in the second gas supply line (3) is controlled by controlling the temperature of the second liquid phase section (3.7) of the gas reservoir (3.2).

## Patentansprüche

1. Gaszufuhranordnung (1) eines Wasserfahrzeugs (6), das dafür ausgelegt ist, Flüssiggas in seinem Frachttank (4), der einen Raumabschnitt über dem Flüssigkeitsspiegel (4.1) und einen Flüssigphasenabschnitt (4.2) aufweist, zu transportieren, und die Fracht als Treibstoff für den Antrieb des Fahrzeugs zu nutzen, wobei die Anordnung Folgendes umfasst:
- eine erste Gaszufuhrleitung (2), die den Raumabschnitt über dem Flüssigkeitsspiegel (4.1) des Frachttanks (4) und eine Gashauptzufuhrleitung (7) verbindet und die mit einem Kompressor (2.1) ausgestattet ist, um den Druck des Gases auf einen hinreichenden Pegel zu erhöhen,
- eine zweite Gaszufuhrleitung (3), die den Flüssigphasenabschnitt (4.2) des Frachttanks (4) und die Gashauptzufuhrleitung (7) verbindet und die mit mindestens einer Pumpe (3.1) ausgestattet ist, um den Druck des Flüssiggases zu erhöhen und das Flüssiggas voranzupumpen,
**dadurch gekennzeichnet, dass**
die zweite Gaszufuhrleitung (3) mit einem Gasvorratsbehälter (3.2) ausgestattet ist, der einen Raumabschnitt über dem Flüssigkeitsspiegel (3.3) und einen Flüssigphasenabschnitt (3.7) aufweist,
wobei der Gasvorratsbehälter (3.2) mit dem Flüssigphasenabschnitt (4.2) des Frachttanks (4) über einen ersten Leitungsabschnitt (3.4) der zweiten Gaszufuhrleitung (3) und mit der Gashauptzufuhrleitung (7) über einen zweiten Leitungsabschnitt (3.5) der zweiten Gaszufuhrleitung (3) verbunden ist, und dass der Gasvorratsbehälter (3.2) mit einer Temperatursteuereinheit (3.6) ausgestattet ist, die eine Heizvorrichtung (3.9; 3.9') umfasst, um das Flüssiggas in dem Flüssigphasenabschnitt (3.7) des Gasvorratsbehälters (3.2) zu erwärmen.

2. Gaszufuhranordnung (1) nach Anspruch 1, **dadurch gekennzeichnet, dass** der Gasvorratsbehälter (3.2) mit einer Füllstandssteuerungsanordnung (8) zum Steuern des Füllstandes des Flüssigphasenabschnitts (3.7) des Gasvorratsbehälters (3.2) ausgestattet ist.

3. Gaszufuhranordnung (1) nach Anspruch 1, **dadurch gekennzeichnet, dass** die Heizvorrichtung (3.9; 3.9') mit einer Steuerungsvorrichtung (9, 9.1) ausgestattet ist, die auf den Gasdruck in dem Gasvorratsbehälter (3.2) anspricht.

4. Gaszufuhranordnung (1) nach Anspruch 3, **dadurch gekennzeichnet, dass** die Heizvorrichtung (3.9) mit einem außerhalb des Gasvorratsbehälters (3.2) angeordneten Wärmetauscher ausgestattet ist, der über eine Leitung (3.10) mit dem Flüssigphasenabschnitt (3.7) des Gasvorratsbehälters (3.2) in Verbindung steht.

5. Gaszufuhranordnung (1) nach Anspruch 1, **dadurch gekennzeichnet, dass** sich der erste Leitungsabschnitt (3.4) der zweiten Gaszufuhrleitung (3) in den Flüssigphasenabschnitt (3.7) des Gasvorratsbehälters (3.2) hinein erstreckt und dass sich der zweite Leitungsabschnitt (3.5) der zweiten Gaszufuhrleitung (3) von dem Raumabschnitt über dem Flüssigkeitsspiegel (3.3) des Gasvorratsbehälters (3.2) zu der Gashauptzufuhrleitung (7) erstreckt.

6. Gaszufuhranordnung (1) nach Anspruch 1, **dadurch gekennzeichnet, dass** der zweite Leitungsabschnitt (3.5) der zweiten Gaszufuhrleitung (3) mit einem automatisch gesteuerten Schließventil (3.13) ausgestattet ist.

7. Gaszufuhranordnung (1) nach Anspruch 1, **dadurch gekennzeichnet, dass** der Flüssigphasenabschnitt (3.7) des Gasvorratsbehälters (3.2) und der Frachttank (4) über ein Rohr (3.14) miteinander verbunden sind, das mit einem Ventil (3.15) ausgestattet ist.

8. Verfahren zum Steuern des Gasdrucks in einer Gaszufuhranordnung eines Wasserfahrzeugs (6) mit einem Frachttank (4) für Flüssiggas, wobei der Frachttank (4) einen Raumabschnitt über dem Flüssigkeitsspiegel (4.1) und einen Flüssigphasenabschnitt (4.2) aufweist, und einer Gasverbrauchsvorrichtung (5), wobei in diesem Verfahren Gas aus dem Frachttank (4) über eine erste Gaszufuhrleitung (2), die mit einem Kompressor (2.1) versehen ist, zu der Gasverbrauchsvorrichtung (5) geleitet wird, wobei der Kompressor den Druck des Gases auf einen hinreichenden Pegel hebt, und zusätzlich oder alternativ über eine zweite Gaszufuhrleitung (3), die den Flüssigphasenabschnitt (4.2) des Frachttanks (4) und die Gasverbrauchsvorrichtung (5) verbindet, zu der Gasverbrauchsvorrichtung (5) geleitet wird, wobei die zweite Gaszufuhrleitung (3) mit einer Pumpe (3.1) ausgestattet ist, um den Druck des Flüssiggases zu erhöhen und das Flüssiggas voranzupumpen,
**dadurch gekennzeichnet, dass**
in der zweiten Gaszufuhrleitung (3) Gas in einen Gasvorratsbehälter (3.2) geleitet wird, der einen Raumabschnitt über dem Flüssigkeitsspiegel (3.3) und einen Flüssigphasenabschnitt (3.7) aufweist, wobei das Gas in diesem Gasvorratsbehälter (3.2) vorübergehend gespeichert wird und wobei aus diesem Gasvorratsbehälter (3.2) Gas in die Gasverbrauchsvorrichtung (5) eingespeist wird, und dass die Temperatur in dem Flüssigphasenabschnitt (3.7) des Gasvorratsbehälters (3.2) durch eine Temperatursteuereinheit (3.6) gesteuert wird, die eine Heizvorrichtung (3.9; 3.9') umfasst.

9. Verfahren zum Steuern eines Gasdrucks nach Anspruch 8, **dadurch gekennzeichnet, dass** der Druck des Gases in der zweiten Gaszufuhrleitung (3) durch Steuern der Temperatur des zweiten Flüssigphasenabschnitts (3.7) des Gasvorratsbehälters (3.2) gesteuert wird.

## Revendications

1. Système d'alimentation en gaz (1) d'un navire (6) adapté pour le transport de gaz liquide dans sa citerne de cargaison (4), possédant une section d'espace vide (4.1) et une section de phase liquide (4.2), et pour utiliser la cargaison en tant que carburant pour fournir de la puissance au navire, le système comprenant
- une première conduite d'alimentation (2) reliant la section d'espace vide (4.1) de la citerne de cargaison (4) et une conduite principale d'alimentation en gaz (7) et qui est équipée d'un compresseur (2.1) pour augmenter la pression du gaz à un niveau adéquat,
- une deuxième conduite d'alimentation en gaz (3) reliant la section de phase liquide (4.2) de la citerne de cargaison (4) et la conduite principale d'alimentation en gaz (7) et étant pourvue d'au moins une pompe (3.1) pour augmenter la pression du gaz liquide et pour pomper celui-ci vers l'avant,
**caractérisé en ce que**
la deuxième conduite d'alimentation en gaz (3) est équipée d'un réservoir à gaz (3.2) possédant une section d'espace vide (3.3) et une section de phase liquide (3.7),
lequel réservoir à gaz (3.2) est relié à la section de phase liquide (4.2) de la citerne de cargaison (4) par une première section de conduit (3.4) de la deuxième conduite d'alimentation en gaz (3) et à la conduite principale d'alimentation en gaz (7) par une deuxième section de conduit (3.5) de la deuxième conduite d'alimentation en gaz (3) et **en ce que** le réservoir à gaz (3.2) est équipé d'une unité de contrôle de température (3.6) comprenant un dispositif de chauffage (3.9 ; 3.9') pour chauffer le gaz liquide dans la section de phase liquide (3.7) du réservoir à gaz (3.2).

2. Système d'alimentation en gaz (1) selon la revendication 1, **caractérisé en ce que** le réservoir à gaz (3.2) est équipé d'un système de contrôle du niveau de surface (8) pour contrôler le niveau de surface de la section de phase liquide (3.7) du réservoir à gaz (3.2).

3. Système d'alimentation en gaz (1) selon la revendication 1, **caractérisé en ce que** le dispositif de chauffage (3.9 ; 3.9') est équipé d'un dispositif de contrôle (9, 9.1) responsable de la pression du gaz dans le réservoir à gaz (3.2).

4. Système d'alimentation en gaz (1) selon la revendication 3, **caractérisé en ce que** le dispositif de chauffage (3.9) est équipé d'un échangeur de chaleur externe au réservoir à gaz (3.2) relié à la section de phase liquide (3.7) du réservoir à gaz (3.2) par des conduits (3.10).

5. Système d'alimentation en gaz (1) selon la revendication 1, **caractérisé en ce que** la première section de conduit (3.4) de la deuxième conduite d'alimentation en gaz (3) s'étend dans la section de phase liquide (3.7) du réservoir à gaz (3.2) et **en ce que** la deuxième section de conduit (3.5) de la deuxième conduite d'alimentation en gaz (3) s'étend de la section d'espace vide (3.3) du réservoir à gaz (3.2) vers la conduite principale d'alimentation en gaz (7).

6. Système d'alimentation en gaz (1) selon la revendication 1, **caractérisé en ce que** la deuxième section de conduit (3.5) de la deuxième conduite d'alimentation en gaz (3) est équipée d'une soupape à fermeture avec commande automatique (3.13).

7. Système d'alimentation en gaz (1) selon la revendication 1, **caractérisé en ce que** la section de phase liquide (3.7) du réservoir à gaz (3.2) et la citerne de cargaison (4) sont reliées l'une à l'autre par un conduit (3.14) équipé d'une soupape (3.15).

8. Procédé de contrôle de la pression du gaz dans un système d'alimentation en gaz d'un navire (6) avec une citerne de cargaison (4) pour le gaz liquide possédant une section d'espace vide (4.1) et une section de phase liquide (4.2), et un dispositif de consommation de gaz (5), procédé dans lequel le gaz de la citerne de cargaison (4) est guidé vers le dispositif de consommation (5) par le biais d'une première conduite d'alimentation en gaz (2) équipée d'un compresseur (2.1), le compresseur augmentant la température du gaz à un niveau adéquat et en plus ou en variante via une deuxième conduite d'alimentation en gaz (3) reliant la section de phase liquide (4.2) de la citerne de cargaison (4) et le dispositif de consommation (5), la deuxième conduite d'alimentation en gaz (3) étant équipée d'une pompe (3.1) pour augmenter la pression du gaz liquide et pour pomper celui-ci vers l'avant,
**caractérisé en ce que**
dans la deuxième conduite d'alimentation en gaz (3), le gaz est alimenté dans un réservoir à gaz (3.2) possédant une section d'espace vide (3.3) et une section de phase liquide (3.7), réservoir (3.2) dans lequel le gaz est stocké temporairement et à partir duquel réservoir (3.2) le gaz est introduit dans le dispositif de consommation de gaz (5), et **en ce que** la température de la section de phase liquide (3.7) du réservoir (3.2) est contrôlée par une unité de contrôle de température (3.6) comprenant un dispositif de chauffage (3.9 ; 3.9').

9. Procédé de contrôle de la pression du gaz selon la revendication 8, **caractérisé en ce que** la pression du gaz dans la conduite d'alimentation en gaz (3) est contrôlée par contrôle de la température de la deuxième section de phase liquide (3.7) du réservoir de gaz (3.2).
